# EUROPÄISCHE PATENTSCHRIFT

(11) **EP 2 948 692 B1**
(45) Veröffentlichungstag und Bekanntmachung des Hinweises auf die Patenterteilung: **12.04.2017**
(21) Anmeldenummer: 14701728.9
(22) Anmeldetag: 24.01.2014
(51) Int. Cl.: F16D 65/18

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 25.01.2013 DE 102013100787
(43) Veröffentlichungstag der Anmeldung: 02.12.2015
(73) Patentinhaber: KNORR-BREMSE Systeme für Nutzfahrzeuge GmbH, 80809 München (DE)
(72) Erfinder: ASEN, Alexander, 94428 Eichendorf (DE)
(86) Internationale Anmeldenummer: PCT/EP2014/051402
(87) Internationale Veröffentlichungsnummer: WO 2014/114748

(56) Entgegenhaltungen:
- EP-A1- 2 412 997
- EP-A1- 2 514 989
- EP-A2- 2 469 118
- DE-C1- 19 855 614

## Beschreibung

Die Erfindung betrifft eine Scheibenbremse für ein Nutzfahrzeug nach dem Oberbegriff des Anspruchs 1.

Der Bremssattel einer solchen aus der DE 198 55 614 C1 bekannten Scheibenbremse, der eine fahrzeugseitige Bremsscheibe übergreift, dient zum einen der Lagerung von Funktionsteilen, die zum Betrieb der Scheibenbremse erforderlich sind, und zum anderen der Aufnahme von Kräften, wie sie beim Bremsen auftreten.

Zu den Funktionsteilen zählt unter anderem eine Zuspanneinrichtung, die in einer Aufnahmekammer des Bremssattels angeordnet ist und die einen sich einerseits an einer Innenwandung des Bremssattels und andererseits an einer Traverse abstützenden schwenkbaren Bremshebel aufweist, sowie mindestens einen, bei einer Bremsung an einen Bremsbelag anpressbaren Bremsstempel, der in der Traverse gelagert ist. Bestandteil der Zuspanneinrichtung ist weiterhin eine Nachstelleinrichtung, mit der ein sich verschleißbedingt veränderndes Lüftspiel, also des Abstands zwischen dem Bremsstempel und dem Bremsbelag, ausgeglichen wird.

An der Traverse stützt sich eine Druckfeder ab, ebenso wie an einer Verschlussplatte, die eine Öffnung der Aufnahmekammer auf der dem zugeordneten Bremsbelag zugewandten Seite verschließt. Dabei ist der oder sind, vorzugsweise zwei parallel und abständig zueinander angeordnete Bremsstempel durch die Verschlussplatte geführt, die mit dem Bremssattel üblicherweise verschraubt ist.

Bei einer Betätigung der Bremse, also einem Verschwenken des Bremshebels, wird die Traverse und werden damit die Bremsstempel gegen den Bremsbelag und in der Folge dieser gegen die Bremsscheibe gepresst, woraufhin bei einem als Schiebesattel ausgebildeten Bremssattel aufgrund der auftretenden Reaktionskräfte der Bremssattel unter Mitnahme eines reaktionsseitigen Bremsbelages in Richtung der Bremsscheibe verfährt, bis beide Bremsbeläge bremsend an der Bremsscheibe anliegen.

Um eine hermetische Abdichtung der Aufnahmekammer zur Umgebung zu erreichen, so dass wirksam das Eindringen von Schmutz und Feuchtigkeit in die Aufnahmekammer auch im Durchtrittsbereich der Bremsstempel durch die Verschlussplatte verhindert wird, ist jede Durchtrittsöffnung durch einen Faltenbalg verschlossen, der einerseits dichtend an der Verschlussplatte und andererseits dichtend am Bremsstempel anliegt.

Die Befestigung des Faltenbalges an der Verschlussplatte erfolgt reibschlüssig, wozu die Durchgangsöffnung der Verschlussplatte einen axial ausgerichteten umlaufenden Kragen aufweist, an dem der aus einem elastischen Material, üblicherweise einem Elastomer, bestehende Faltenbalg flächig anliegt. Um einen ausreichenden Anpressdruck zu erreichen, ist im Anlagebereich mit dem Kragen in den Faltenbalg ein Versteifungsring aus Metall eingebettet.

Für einen akzeptablen Reibschluss sind im Bereich des Kragens enge Durchmessertoleranzen einzuhalten, die naturgemäß nur mit einer relativ aufwendigen und entsprechend kostenintensiven Fertigung erreichbar sind.

Mittels der erwähnten, zwischen der Traverse und der Verschlussplatte angeordneten Druckfeder, üblicherweise einer Schraubenfeder, wird die Traverse und werden damit die Bremsstempel bei einem Lösen der Bremse in eine Endstellung zurückgedrückt, wobei zuvor beim Bremsen die Druckfeder durch Zusammendrücken gespannt ist und die Verschlussplatte in diesem Fall ein Widerlager bildet.

Um die durch den Bremshebel aufgebrachten Bremskräfte aufzunehmen, muss die Verschlussplatte biegesteif ausgeführt sein, wozu diese in ihrer Dicke entsprechend dimensioniert ist.

Allerdings ist damit ein relativ hohes Gewicht der Verschlussplatte verbunden, was der steten Forderung nach einer Gewichtsoptimierung aller Bauteile entgegensteht.

Der Erfindung liegt die Aufgabe zugrunde, eine Scheibenbremse der gattungsgemäßen Art so weiterzuentwickeln, dass sie mit geringem konstruktiven und fertigungstechnischen Aufwand kostengünstiger herstell- und betreibbar ist.

Diese Aufgabe wird durch eine Scheibenbremse mit den Merkmalen des Anspruchs 1 gelöst.

Durch die quasi stoffschlüssige Verbindung des Faltenbalgs mit der Verschlussplatte, die durch das erfindungsgemäße Anspritzen an den Randbereich der Durchgangsöffnung hergestellt wird, ergibt sich eine wesentliche Kostenminimierung gegenüber dem Stand der Technik. Insbesondere aufgrund der einfacheren Herstellung, da keine engen Toleranzen eingehalten werden müssen.

Darüber hinaus wird eine Relativbewegung des Faltenbalgs zur Verschlussplatte im Verbindungsbereich damit mit der Gefahr des Lösens der Verbindung, wie sie beim Stand der Technik durchaus gegeben ist, verhindert, so dass eine dauerhaft sichere Abdichtung gewährleistet ist. Bislang auftretende Probleme bei der Montage des Faltenbalgs an der Verschlussplatte, insbesondere hinsichtlich einer unerwünschten Spaltbildung, sind gleichfalls ausgeschlossen.

Da der Faltenbalg nunmehr sicher an der Verschlussplatte verankert ist, ein Lösen der Verbindung, wie erwähnt, nicht mehr möglich ist, verbessert sich die Betriebssicherheit und erhöht sich die Standzeit der Bremse insgesamt.

Vor allem zur Gewichtsreduzierung trägt der weitere Erfindungsgedanke bei, nach dem im Anlagebereich der Druckfeder ein Verstärkungselement vorgesehen ist, das quasi ein Widerlager für die Druckfeder bildet und das mit dem Bremssattel verbunden ist.

Bevorzugt wird als Verstärkungselement ein entsprechend ausgebildetes Verstärkungsblech eingesetzt, das mit dem Bremssattel verschraubt ist, ebenso wie die Verschlussplatte im Übrigen.

Zur direkten Anlage der Druckfeder an dem Verstärkungselement kann in der Verschlussplatte ein Ausschnitt vorgesehen sein, der von dem Verstärkungselement überdeckt wird und von der Druckfeder durchtreten wird.

Um eine ausreichende Abdichtung der Aufnahmekammer zu gewährleisten, ist das Verstärkungselement gegenüber der Verschlussplatte abgedichtet, wozu eine Dichtschnur, beispielsweise aus einem Silikon, eingebracht ist, die umlaufend geführt ist.

Alternativ kann auf den Ausschnitt der Verschlussplatte verzichtet werden und lediglich das Verstärkungselement in Form des Verstärkungsbleches quasi als Aufdoppelung vorgesehen sein.

In jedem Fall kann die Dicke der Verschlussplatte erheblich minimiert werden, da die beim Bremsen wirksamen Druck- bzw. Biegekräfte von dem Verstärkungselement aufgenommen werden. Es ergibt sich so eine durchaus bemerkenswerte Gewichtsreduzierung, die zur Betriebskostensenkung beiträgt.

Im Übrigen ist das Verstärkungselement, insbesondere in Form eines Verstärkungsbleches sehr einfach herzustellen und im Lichte der Materialeinsparung der Verschlussplatte kostenneutral.

Zur Abdichtung kann die Verschlussplatte zum Bremssattel hin mit einer partiellen oder vollflächigen Dichtschicht versehen sein, beispielsweise aus Silikon oder einem vergleichbaren Material, aus dem auch der Faltenbalg besteht.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbremse in einer perspektivischen Ansicht

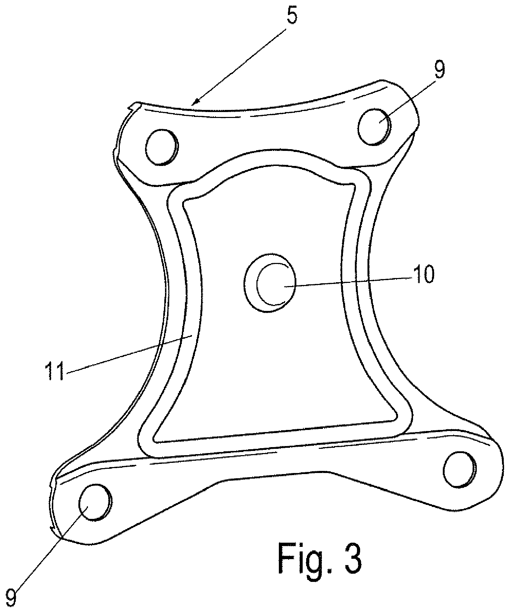

- Figuren 2 und 3: jeweils ein Einzelteil der Scheibenbremse, gleichfalls schaubildlich dargestellt.

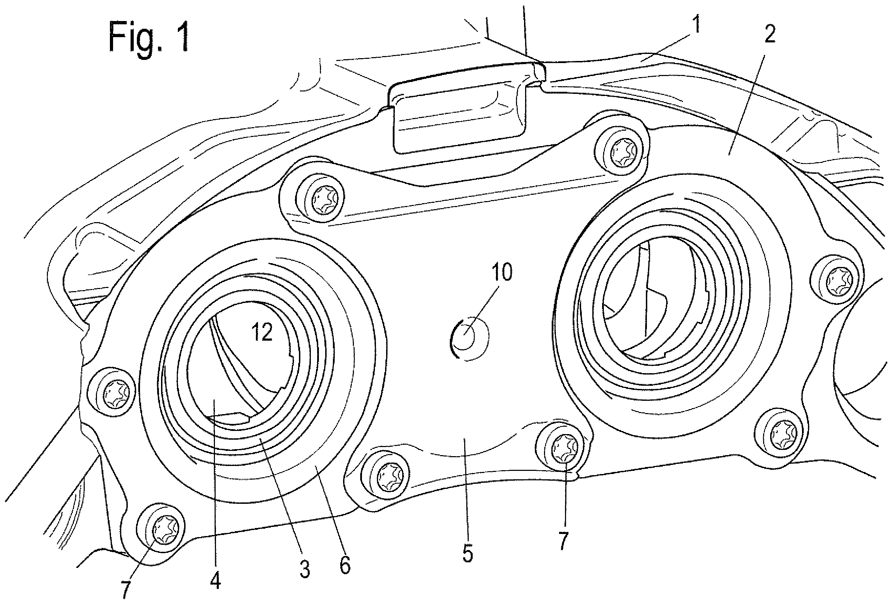

In der Figur 1 ist ein Teil eines Bremssattels 1 einer Scheibenbremse für Nutzfahrzeuge erkennbar, mit einem Aufnahmeraum 12 zur Aufnahme von Funktionsteilen, wie einer Zuspanneinrichtung, der durch eine Verschlussplatte 2 verschlossen ist.

Diese ist mit zwei Durchgangsöffnungen 4 versehen, durch die nicht gezeigte Bremsstempel der Zuspanneinrichtung führbar sind, wobei diese Bremsstempel in einer mittels einer Druckfeder belasteten Traverse gehalten sind, die bei einer Bremsung gegen die Kraft einer Druckfeder relativ zur Verschlussplatte 2 bewegbar ist. Dabei ist die Druckfeder zwischen der Verschlussplatte 2 und der Traverse angeordnet, wobei sie auf einen Zentrierdom 10 der Verschlussplatte 2 aufgesetzt wird, wodurch eine seitliche Auslenkung der Druckfeder verhindert wird.

Um den Aufnahmeraum 12 im Bereich der Durchgangsöffnungen 4 abzudichten, sind Faltenbälge 3 vorgesehen, die jeweils mit einem Endbereich an einen Randbereich 6 der zugeordneten Durchgangsöffnung 4 durch Anspritzen mit der Verschlussplatte 2 verbunden sind. Mit dem anderen Endbereich liegt der Faltenbalg 3 dichtend an dem durchgeführten Bremsstempel an.

Zur Aufnahme der durch die Druckfeder wirksamen Kraft weist die Verschlussplatte 2 ein Verstärkungselement 5 in Form eines Verstärkungsblechs auf, das zusammen mit der Verschlussplatte 2 im Übrigen mit dem Bremssattel 1 durch Schrauben 7, die durch Löcher 9 geführt sind, verbunden ist.

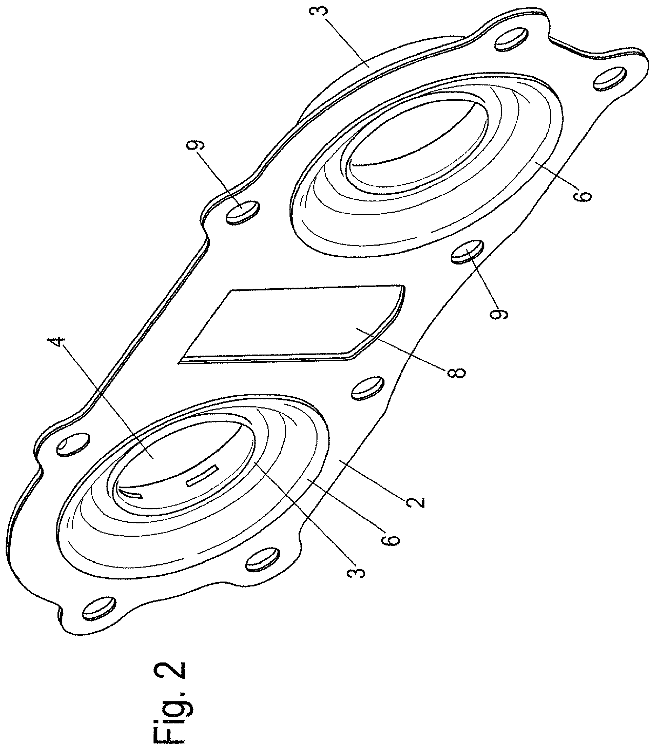

In der Figur 2 ist erkennbar, dass die Verschlussplatte 2 einen fensterartigen Ausschnitt 8 aufweist, der, gemäß der Figur 1, durch das Verstärkungselement 5 überdeckt wird und der dem Durchlass der Druckfeder bis zur Anlage am Verstärkungselement 5 dient.

Für eine hermetische Abdichtung der Anlage des Verstärkungselementes 5 an der Verschlussplatte 2 ist eine umlaufende, schnurartige Dichtung 11 vorgesehen, die bevorzugt als Zwei-Komponenten-Dichtung ausgebildet ist.

Auf die Dichtung 11 kann dann verzichtet werden, wenn die Verschlussplatte 2 keinen Ausschnitt 8 aufweist, sondern die Druckfeder unmittelbar an der insoweit geschlossenen Fläche der Verschlussplatte 2 anliegt. Das Verstärkungselement 5 bildet dann eine Aufdoppelung, während die Verschlussplatte 2 ansonsten aus einem sehr dünnen Material, vorzugsweise einem Blech, hergestellt sein kann.

Die Abdichtung der Verschlussplatte 2 gegenüber dem Bremssattel 1 im gemeinsamen Anlagebereich kann, wie bisher, durch eine separate Abdichtung, insbesondere eine Dichtschnur erfolgen. Denkbar ist aber auch, eine Schicht aus einem geeigneten Material mehr oder weniger vollflächig aufzutragen, wobei dieses Material bevorzugt dem entspricht aus dem die Faltenbälge 3 hergestellt sind, so dass das Anspritzen der Faltenbälge 3 und das Aufbringen der Dichtschicht in einem Arbeitsgang erfolgen kann.

## Patentansprüche

1. Scheibenbremse für ein Nutzfahrzeug, mit einem Bremssattel (1), der eine durch eine Verschlussplatte (2) verschließbare Aufnahmekammer (12) für eine Zuspanneinrichtung aufweist, wobei die Zuspanneinrichtung mit einer mittels eines Bremshebels und durch eine Druckfeder belasteten relativ zur Verschlussplatte (2) verschiebbaren Traverse versehen ist, in der mindestens ein Bremsstempel gelagert ist, der eine Durchgangsöffnung (4) der Verschlussplatte (2) durchtritt, an der mit einem Endbereich ein die Durchgangsöffnung (4) randseitig abdichtender Faltenbalg (3) gehalten ist, der andererseits mit dem Bremsstempel verbunden ist, **dadurch gekennzeichnet, dass** der Faltenbalg (3) im Randbereich (6) der Durchgangsöffnung (4) an der Verschlussplatte (2) angespritzt ist und die Verschlussplatte (2) im Anlagebereich der Druckfeder ein mit dem Bremssattel (1) verbundenes Verstärkungselement (5) aufweist.

2. Scheibenbremse nach Anspruch 1, **dadurch gekennzeichnet, dass** die Verschlussplatte (2) einen von dem Verstärkungselement (5) überdeckten fensterartigen Ausschnitt (8) aufweist, durch den die Druckfeder zur Anlage an dem Verstärkungselement (5) geführt ist.

3. Scheibenbremse nach Anspruch 1 oder 2, **dadurch gekennzeichnet, dass** das Verstärkungselement (5) aus Blech besteht.

4. Scheibenbremse nach einem der vorhergehenden Ansprüche, **dadurch gekennzeichnet, dass** das Verstärkungselement (5) mit dem Bremssattel (1) verschraubt ist.

5. Scheibenbremse nach einem der Ansprüche 2 bis 4, **dadurch**
**gekennzeichnet, dass** bei Überdeckung des Ausschnitts (8) durch das Verstärkungselement (5) zwischen dem Verstärkungselement (5) und der Verschlussplatte (2) eine Dichtung (11) vorgesehen ist.

6. Scheibenbremse nach Anspruch 5, **dadurch**
**gekennzeichnet, dass** die Dichtung (11) als Zwei-Komponenten-Dichtung ausgebildet ist.

7. Scheibenbremse nach einem der Ansprüche 5 oder 6, **dadurch**
**gekennzeichnet, dass** die Dichtung (11) umlaufend als Dichtschnur ausgebildet ist.

8. Scheibenbremse nach einem der vorhergehenden Ansprüche, **dadurch gekennzeichnet, dass** das Verstärkungselement (5) einen zum Aufnahmekammer (12) hin erhabenen Zentrierdom (10) aufweist, der in die als Schraubenfeder ausgebildete Druckfeder ragt.

9. Scheibenbremse nach einem der vorhergehenden Ansprüche, **dadurch gekennzeichnet, dass** die Verschlussplatte (2) auf ihrer der Aufnahmekammer (12) zugewandten Seite partiell oder vollständig mit einer Dichtungsschicht versehen ist.

10. Scheibenbremse nach Anspruch 9, **dadurch**
**gekennzeichnet, dass** die Dichtungsschicht einstückig mit dem Faltenbalg (3) ausgebildet ist.

11. Scheibenbremse nach einem der Ansprüche 9 oder 10, **dadurch**
**gekennzeichnet, dass** der Faltenbalg (3) und/oder die Dichtungsschicht aus einem elastischen Material, vorzugsweise einem Elastomer besteht.

## Claims

1. Disc brake for a utility vehicle, having a brake calliper (1) which has a receiving space (12), which can be closed by a closure plate (2), for a brake application device, wherein the brake application device is provided with a cross-beam, which can be displaced relative to the closure plate (2) and is loaded by means of a brake lever and by a compression spring, in which cross-beam at least one brake plunger is mounted, which passes through an aperture (4) of the closure plate (2), against which, with an end region, a bellows (3) sealing the aperture (4) at the edges is held, the bellows (3) also being connected to the brake plunger, **characterised in that** the bellows (3) is injection moulded in the edge region (6) of the aperture (4) on the closure plate (2), and the closure plate (2) has, in the abutment region of the compression spring, a reinforcing element (5) connected to the brake calliper (1).

2. Disc brake according to claim 1, **characterised in that** the closure plate (2) has a window-like cut-out (8) overlapped by the reinforcing element (5), through which cut-out the compression spring is guided to lie against the reinforcing element (5).

3. Disc brake according to claim 1 or 2, **characterised in that** the reinforcing element (5) is made of sheet metal.

4. Disc brake according to one of the preceding claims, **characterised in that** the reinforcing element (5) is screwed to the brake calliper (1).

5. Disc brake according to one of claims 2 to 4,
**characterised in that**, when the cut-out (8) is overlapped by the reinforcing element (5), a seal (11) is provided between the reinforcing element (5) and the closure plate (2).

6. Disc brake according to claim 5,
**characterised in that** the seal (11) is formed as a two-component seal.

7. Disc brake according to one of claims 5 or 6,
**characterised in that** the seal (11) is formed as a circumferential seal strip.

8. Disc brake according to one of the preceding claims, **characterised in that** the reinforcing element (5) has a centring pin (10) elevated towards the receiving space (12), the centring pin projecting into the compression spring formed as a helical spring.

9. Disc brake according to one of the preceding claims, **characterised in that** the closure plate (2) is provided, on its side facing towards the receiving space (12), partially or completely with a sealing layer.

10. Disc brake according to claim 9,
**characterised in that** the sealing layer is formed integrally with the bellows (3).

11. Disc brake according to one of claims 9 or 10,
**characterised in that** the bellows (3) and / or the sealing layer is / are composed of an elastic material, preferably an elastomer.

## Revendications

1. Frein à disque pour un véhicule utilitaire comprenant un étrier (1) de frein, qui a une chambre (12) de réception d'un dispositif de serrage pouvant être fermée par une plaque (2) de fermeture, le dispositif de serrage étant pourvu d'une traverse pouvant coulisser par rapport à la plaque (2) de fermeture, au moyen d'un levier de frein et en étant soumise à un ressort de compression, traverse dans laquelle est monté au moins un piston de frein, qui passe dans une ouverture (4) traversante de la plaque (2) de fermeture, sur laquelle est maintenu, par une région d'extrémité, un soufflet (3) à plis rendant étanche l'ouverture (4) traversante du côté du bord, lequel est relié d'autre part au piston de frein, **caractérisé en ce que** le soufflet (3) à plis est moulé par injection sur la plaque (2) de fermeture dans la région (6) de bord de l'ouverture (4) traversante et la plaque (2) de fermeture a, dans la région d'application du ressort de compression, un élément (5) de renfort relié à l'étrier (1) de frein.

2. Frein à disque suivant la revendication 1, **caractérisé en ce que** la plaque (2) de fermeture a une découpe (8)de type en hublot, qui est recouverte par l'élément (5) de renfort et dans laquelle le ressort de compression passe pour s'appliquer à l'élément (5) de renfort.

3. Frein à disque suivant la revendication 1 ou 2, **caractérisé en ce que** l'élément (5) de renfort est en tôle.

4. Frein à disque suivant l'une des revendications précédentes, **caractérisé en ce que** l'élément (5) de renfort est vissé à l'étrier (1) de frein.

5. Frein à disque suivant l'une des revendications 2 à 4, **caractérisé en ce que**, lorsque l'élément (5) de renfort recouvre la partie (8) découpée, une garniture (11) d'étanchéité est prévue entre l'élément (5) de renfort et la plaque (2) de fermeture.

6. Frein à disque suivant la revendication 5, **caractérisé en ce que** la garniture (11) d'étanchéité est constituée d'une garniture d'étanchéité à deux composants.

7. Frein à disque suivant l'une des revendications 5 ou 6, **caractérisé en ce que** la garniture (11) d'étanchéité est constituée d'un cordon d'étanchéité faisant le tour.

8. Frein à disque suivant l'une des revendications précédentes, **caractérisé en ce que** l'élément (5) de renfort a une broche (10) de centrage, qui est en saillie par rapport à la chambre (12) de réception et qui pénètre dans le ressort de compression constitué sous la forme d'un ressort hélicoïdal.

9. Frein à disque suivant l'une des revendications précédentes, **caractérisé en ce que** la plaque (2) de fermeture est pourvue, du côté tourné vers la chambre (12) de réception, en tout ou partie, d'une couche d'étanchéité.

10. Frein à disque suivant la revendication 9, **caractérisé en ce que** la couche d'étanchéité est constituée d'une pièce avec le soufflet (3) à plis.

11. Frein à disque suivant l'une des revendications 9 ou 10, **caractérisé en ce que** le soufflet (3) à plis et/ou la couche d'étanchéité sont en une matière élastique, en étant de préférence en un élastomère.
